Europäisches Patentamt

European Patent Office

Office européen des brevets

(19)

(11) Publication number: **0 188 308 B1**

# EUROPEAN PATENT SPECIFICATION

(12)

(45) Date of publication of patent specification: **03.04.91**  (51) Int. Cl.⁵: **A01G 25/09**

(21) Application number: **86300020.4**

(22) Date of filing: **03.01.86**

(54) **Liquid disposal mechanism.**

(30) Priority: **04.01.85 NZ 210739**
**09.01.85 NZ 210791**

(43) Date of publication of application:
**23.07.86 Bulletin 86/30**

(45) Publication of the grant of the patent:
**03.04.91 Bulletin 91/14**

(84) Designated Contracting States:
**AT BE CH DE FR GB IT LI LU NL SE**

(56) References cited:
**EP-A- 0 006 394**
**GB-A- 377 418**
**US-A- 2 078 987**
**US-A- 2 602 696**

(73) Proprietor: **BRIGGS IRRIGATION UK LIMITED**
**6 Enterprise Park Hunters Road**
**Corby Northamptonshire NN17 1JE(GB)**

(72) Inventor: **Cullimore, Ian W.**
**Robinson Street**
**Ashburton(NZ)**
Inventor: **Briggs, Warren Robert**
**Spurlands End Road Great Kingshill**
**High Wycombe Buckinghamshire, HP15**
**6PE(GB)**

(74) Representative: **Johnson, Terence Leslie et al**
**Edward Evans & Co. Chancery House 53-64**
**Chancery Lane**
**London WC2A 1SD(GB)**

## Description

The invention relates to liquid dispersal and more particularly to an irrigator or liquid waste disposable mechanism of the type which travels under its own power.

At present in certain industries there is a need to disperse relatively small quantities of liquids, for example effluent onto the ground where it degrades into the earth as a fertilizer. For example, the effluent from meat works is often dispersed over the ground. In addition there is a need for a small scale irrigator for use in confined spaces, for example, parks, golf courses or on small farms.

GB-A-377418 discloses a watering apparatus which is drawn over the ground when an arm strikes a roller to pivot a lever connected to a pivot of a cable drum, which pivot is vertical. The pivot is offset from the centre of the apparatus and the arm, being long, provides an indirect drive which leads to erratic movement and hence uneven distribution of water.

An object of the invention is to seek to mitigate this disadvantage by providing a small scale irrigator or liquid waste disposable mechanism.

According to the invention there is provided a mechanism for dispersing a liquid, comprising a boom, a wheeled chassis, a winch drum with an axis of rotation a ratchet wheel connected with the drum, a ratchet lever, supported by a connecting rod, drive means for the drum carried by an upstand, a hose connection, dispersing means, means to adjust the speed of the mechanism over the ground, the wheeled chassis supporting the winch drum and the upstand at the lower end (in use) of which upstand there is the hose connection and at an upper portion thereof there is the drive means on the periphery thereof, the upstand being rotatable relative to the wheeled chassis, the top of the upper portion supporting the boom at either end of which is the dispersing means which are directed to throw water or effluent out on opposite sides of a longitudinal axis of the boom, whereby, in use, with water or effluent being fed by a flexible hose to the connection and up the upstand, along the boom and from the dispersing means the boom is caused to rotate so that the drive means on the upstand engages the ratchet lever which in turn rotates the ratchet wheel which operates the winch drum to pull in a cable thereby to pull the wheeled chassis along the cable, characterised in that the winch drum is mounted on the wheeled chassis with the rotational axis thereof substantially horizontal (transverse to the direction of motion of the chassis), in that the drive means comprises cam means adapted to actuate the ratchet lever, in that there is a guide for guiding the cable as it traverses across the drum, and in that there is a pivotable device to disengage the drive means at the end of a run of the mechanism.

The boom may be a length of about 50mm pipe mounted by a T-junction at the top of the upstand. The boom may be about 2m to 6m in length.

The wheeled chassis may be generally T- or V-shaped in plan and constructed of box-sectional metal tube with a pair of wheels on the ends of the transverse bar.

Mechanism for dispersing a liquid are hereinafter described, by way of example, with reference to the accompanying drawings in which:

Fig. 1 shows a perspective view from the side of an effluent irrigator according to the invention;

Fig. 2 shows a side elevation of a drive mechanism for the irrigator shown in Fig. 1;

Fig. 3 shows a plan view of the drive mechanism shown in Fig. 2;

Fig. 4 shows a perspective view of part of a second embodiment.

Fig. 5 is a schematic view in perspective of a device to ensure disengagement of drive at the end of a run;

Fig. 6 is a schematic elevational view of a drum and wire guide according to the invention;

Fig. 7 is a schematic plan view, to a smaller scale than Fig. 6, of the drum and wire guide of that figure; and

Figure 8 is a schematic side elevational view of a back stop device.

The examples will be described with reference to effluent disposal and it is to be appreciated that with minor modifications the invention can be adapted to irrigate artesian or the like water pumped to the irrigator via a flexible trailing hose.

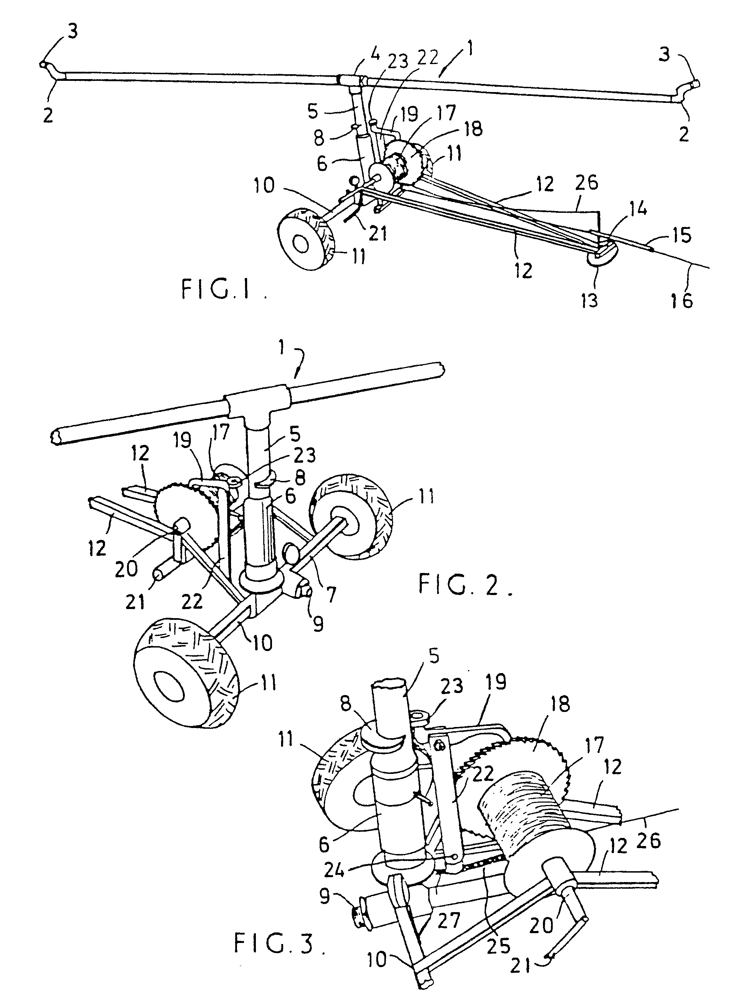

Referring to Figs. 1-3, the irrigator has a rotatable boom 1 at the ends of which are angled regions 2. The angled regions 2 are directed on opposite sides of the longitudinal axis of the boom 1 to cause rotation therein when water is pumped to the boom 1. The regions 2 may have rubber or the like nozzles 3 chosen so that larger pieces of effluent can be pumped therefrom. The boom 1 may be two lengths of galvanised or PVC 50mm pipe joined at the centre by a T-junction 4. The boom 1 is supported by an upper part 5 of an upstand 6. The upper part 5 can rotate relative to the wheeled frame 7 on which it is supported. The part 5 has on the periphery thereof at least one cam surface 8. In the example a single cam is shown. If varying travelling speeds are required then two cams on opposite sides of the part 5 can be included to increase the number of times the cam means operates per revolution of the boom 1 or the teeth on the ratchet wheel can be changed to adjust the speed of revolution of the boom.

The bottom of the upstand 6 (which is hollow or has a passage therethrough) is connected to a water connection 9 at the rear of the wheeled frame 7.

The wheeled frame 7 may be generally T- or V-shaped with a transverse member 10 supporting at its ends a pair of wheels 11. The longitudinal arms 12 of the frame 7 may support a front wheel (not shown) or a skid 13 as shown. The forward end 14 may support a tube 15 through which a cable 16 passes. One end of the cable 16 is fixed to a winch drum 17 mounted on the frame 7 while the other end is fixed to a post or spike driven into the ground at the end of the area over which the effluent is to be dispersed.

The winch drum 17 is mounted with its axis transversely mounted and horizontal as shown. In the example one end flange 18 is a ratchet wheel in contact with the teeth on the periphery of which is a ratchet lever 19. The axle 20 supporting the winch drum 17 may include a cranked handle 21 for manual winding in of the cable 16.

The ratchet lever 19 is supported by a connecting rod 22 which moves arcuately. The connecting rod 22 or the end of the ratchet lever 19 has a wheel 23 which runs on the cam surface 8. The lower end 24 of the rod 22 has a biasing means 25 attached thereto.

The biasing means 25 is adapted to hold the wheel 23 in contact with the cam surface 8 and the surface of the upper part 5.

In use with a supply of effluent pumped via a flexible polyethylene pipe to the connection 9 it flows through the upstand and out along the boom 1 to cause rotation of the boom 1 as it exits from the nozzles 3. The rotation of the cam surface(s) 8 on the upstand pivots the rod 22 about 24 against the action of the biasing means and thus cause(s) the ratchet lever 19 to engage the ratchet wheel 18 to rotate the winch drum 17. The length of cable drawn in is varied by the number of cam surfaces 8 or by adjusting the number of teeth engaged on the ratchet wheel.

The operation of the irrigator across an area is halted by a block on the line contacting the tube 15. When this occurs the member 26 is released and a cable 27 to the biasing means 25 releases the tension therein so that the wheel 23 moves away from the cam surface 8 under the bias of a spring. This thereby stops movement of the frame 7.

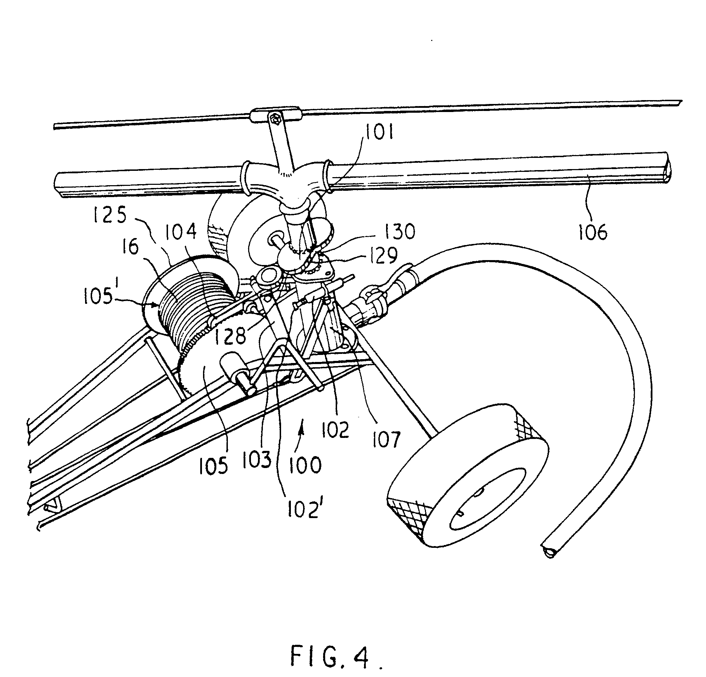

Referring now the embodiment shown in Fig. 4, the effluent irrigator 100 is similar to that shown in Figs. 1-3, except that the cam 101 is a double cam, and there is a means in the form of an adjustable stop 102 which determines whether connecting rod 103 allows the ratchet 104 to be retracted a greater or lesser extent, and so determines the speed of the irrigator 100 over the ground. The stop 102 comprises a rod mounted in a tube into which it can be retracted and from which it can be extended, as by being screwed when they are screw-threaded. The rod has a head 102' against which rod 103 abuts. Adjustment of the rod may be so that the ratchet 104 is retracted 4 teeth of the wheel 105, for fast travel, or say one (1) tooth of the wheel 105 for slow travel. The adjusting means 102 suitably provides four different forward speeds, and the clearance between the two parts of the cam 101 is half the spacing between the teeth of wheel 105 so as to provide a non-jamming arrangement on rotation.

In each case, the irrigator 100 has a frame similar to that shown in Figs. 1-3, and includes extending tranversely thereof and forwardly, in use, of the upstand 107, a journal in the form of a rod 108 which extends right across the frame for mounting and providing a common axis of rotation for a device 109 to ensure disengagement of the drive at the end of a run, a wire guide 110, and a back stop device 111.

The device 109 comprises a counterbalance weight in the form of a plate 112 mounted on the lower (in use) end of rod 103 on the side of the rod or journal 108 remote from ratchet 104 by a support 113. A spring 114 equivalent to the spring 25 of the first embodiment is connected to the plate 112.

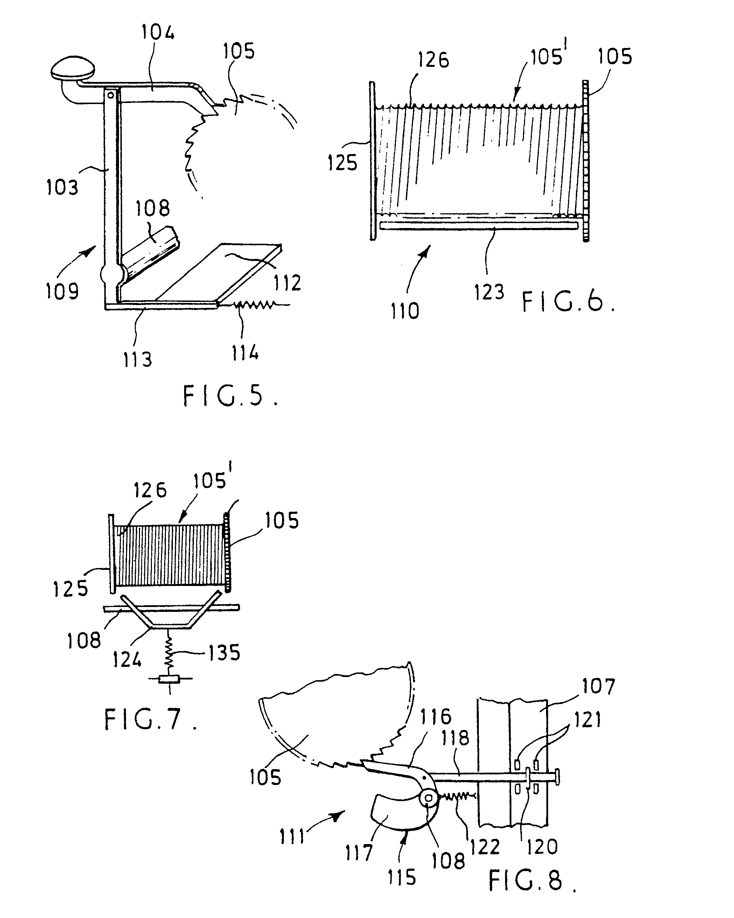

The plate 112 acts at the end of a run to disengage the drive by pivoting the support 113 clockwise (as viewed in Fig. 5) when the tension of spring 114 is released, so ensuring that the rod 103 and hence ratchet 104 also pivot about rod or journal 108 out of the range of the cam 101 for total disengagement. The ratchet 104 slides forwardly over the teeth of wheel 105 but out of driving engagement with them.

The back stop device 111 (Fig.8) is used at the start of an irrigation run to ensure that the driving gear, that is wheel 105 and ratchet 104 are properly engaged. The device 111 comprises a toggle lever 115 journalled for rotation on the rod or journal 108. One arm 116 of the lever 115 comprises a ratchet or pawl and the other 117, a weight. A pull rod 118 is pivoted to the pawl 116 and has a stop 120 which can be received in a slat or stirrup 121 on the upstand 107. A spring 122 is connected between the lever 115 and the upstand 107 and normally acts to urge the pawl 116 into engagement with wheel 105. In use the pull rod 118 is released normally by lifting from the seat 121, or stirrup to release stop 120 so that the spring 122 urges the pawl 116 into engagement with the teeth of the wheel 105. This provides a "stop" for the wheel so that the ratchet 104 is properly engaged therewith at the start of the run when paying out a cable like that 16 (Fig. 1) to overcome resistance caused by grit or other obstructions in the apparatus.

The wire guide 110 comprises a round section bar 123 (Fig. 6) held by a frame 124 pivotally mounted on the rod or journal 108 under adjustable spring pressure 135 , the end of the spring 135 remote from the bar 123 being secured by a threaded rod and nut arrangement in a part of the frame of the irrigator to provide the adjustment. The bar 123 is situated between the side flanges 105, of the drum 105', and is spaced from each flange 105,125 by a distance less than the diameter of the wire or cable 16. The distance between the curved surface of the rod 123 and the surface of the drum 105' is just sufficient to enable the wire or cable to pass through and be wound onto or unwound from the drum 105'.

The drum 105' itself has formed in its surface a thread like groove 126 each turn of which is equal to (or just slightly greater in width than) the diameter of the wire or cable 16. In use, like cable 16 is passed between the rod 123 and drum 105' and wound round the drum from one end. When irrigation starts and the irrigator 100 begins to move across the land being irrigated, the bar 123 guides the cable 16 evenly across the drum because it is under a greater tension (from spring 135) than the tension of the wire. The wire lays itself in the thread 126 as it traverses the drum 105' when it reaches the end opposite that from which it started, it effectively has nowhere to go except back across the drum in a reverse traverse, the layer of wire already laid down effectively providing the "thread". The extra thickness of wire pushes the bar 123 away against the spring 135 pressure so that the rod still acts as a guide. In this way the wire is guided to-and-fro across the drum as the irrigator makes its full traverse of the land being irrigated. The wire or cable is thus evenly laid up on the drum and is therefore readily wound and unwound without snagging or kinking, and therefore the irrigator operates smoothly over its run.

The spring 135 is adjustable to provide for different diameters of wire or cable.

The cam 101 is contoured as shown in Fig. 4 to give a firm even push, via a curved part 128, to the ratchet 104 and to provide via a flat part 129 a slow release of the ratchet over the first three teeth of wheel 105 in a four teeth driving section before the gap or concave curved part 130 which provides a clean or rapid disengagement of the ratchet as it falls away from the teeth, prior to engagement by the next curved part 128 to start the next drawing action. The cam 101 acts on the ratchet and therefore in the fast setting of the adjustable means 102, one revolution of the upstand can move eight teeth. There is also a seal of oil impregnated nylon (or similar suitable plastics material) where the boom 106 rotates in the upstand 107, to provide smooth rotation, and which is inert and does not become corroded by the highly corrosive effluent.

The angle of the nozzle at each end of the boom is in the range 45°-30° (preferably 45°) to the longitudinal axis of the boom.

The dispersal of effluent using a mechanism 100 according to the invention is shown in the following results of runs, on which "four (4) teeth" refers to the setting of the ratchet to produce a fast travel over the ground and the "one (1) tooth" refers to the slowest travel over the ground:-

RUN 1

5 collecting trays each of area 2254 cms$^2$ were set out across a 20 m width of field.

Average application 3166 ml

| | |
|---|---|
| 3166 ÷ 2254 | = 1.40 cm |
| Hence depth of application | = 14 mm |
| Speed over 10 m | = 12.7 minutes (4 teeth) |
| Hence travel speed | = 47.24 m/hr |

Total application per setting = 56 m$^3$

Machine will cover 200 m in 4.2 hours.

| | |
|---|---|
| Boom rotation | = once every 5 seconds |
| Nozzle size | = 11 mm, rubber |
| Tractor rpm | = 1240 |
| Connection pressure | = 2 bar (30 psi) estimate |

RUN 2
The same 5 collecting trays were again set out across a 20 m width of field.

| | |
|---|---|
| Average application 1272 ml | |
| 1272 ÷ 2254 | = 0.56 cm |
| Hence depth of application | = 5.6 mm |
| Speed over 10 m | = 14.90 minutes (4 teeth) |
| Hence travel speed | = 40.26 m/hr |
| Total application per setting | = 22 m³ |
| Machine will cover 200 m in 5 hours. | |
| Boom rotation | = once every 5 seconds |
| Nozzle size | = 7 mm, rubber |
| Tractor rpm | = 1150 |
| Connection pressure | = 2 bar (30 psi) estimate |

RUN 3
The same 5 collecting trays were once more set out across a 20 m width of field.

| | |
|---|---|
| Average application 10,672 ml | |
| 10,672 ÷ 2254 | = 4.73 cm |
| Hence depth of application | = 47.3 mm |
| Speed over 10 m | = 47.3 minutes (1 tooth) |
| Hence travel speed | = 12.68 m/hr |
| Total application per setting | = 189 m³ |
| Machine will cover 200 m in 4.2 hours. | |
| Boom rotation | = once every 4 seconds |
| Nozzle size | = 11 mm, rubber |
| Tractor rpm | = 1240 |
| Connection pressure | = 2 bar (30 psi) estimate |

Thus by this invention there is provided a small scale irrigator or liquid waste disposal mechanism. The irrigators described operate under low pressure (2 bar:30 psi) of effluent passing through a large diameter (7.5cm) pipe.

In a modification, not shown, the pawl 104 may not be directly struck by the cam, but may move to and fro in a guide operated by the cam.

**Claims**

1. A mechanism for dispersing a liquid, comprising a boom (1,106), a wheeled chassis (7), a winch drum (17,105') with an axis of rotation, a ratchet wheel (18) connected with the drum (17,105'), a ratchet lever (19,104), supported by a connecting rod (22,103), drive means (8,101) for the drum (17,105') carried by an upstand (6,107), a hose connection dispersing means(3), means (102) to adjust the speed of the mechanism over the ground, the wheeled chassis (7) supporting the winch drum (17,105') and the upstand (6,107) at the lower end (in use) of which upstand there is the hose connection (9) and at an upper portion thereof there is the drive means (8,101) on the periphery thereof, the upstand (6,107) being rotatable relative to the wheeled chassis (7), the top of the upper portion supporting the boom (1,106) at either end of which is the dispersing means (3) which are directed to throw water or effluent out on opposite sides of a longitudinal axis of the boom (1,106), whereby, in use, with water or effluent being fed by a flexible hose to the connection and up the upstand (6,107), along the boom (1,106) and from the dispersing means (3) the boom (1,106) is caused to rotate so that the drive means (8,101) on the upstand engages the ratchet lever (19,104) which in turn rotates the ratchet wheel (18) which operates the winch drum (17,105') to pull in a cable (16) thereby to pull the wheeled chassis (7) along the cable (16), characterised in that the winch drum (17,105') is mounted on the wheeled chassis (7) with the rotational axis thereof substantially horizontal (transverse to the direction of motion of the chassis), in that the drive means (8, 101) comprises cam means adapted to actuate the ratchet lever (l9,104) in that there is a guide (110) for guiding the cable (16) as it traverses across the drum (17,105'), and in that there is a pivotable device (10% 112, 113, 114) to disengage the drive means (8,101) at the end of a run of the mechanism.

2. A mechanism according to Claim 1, characterised by the wheeled chassis (7) comprising a T-shape or V-shape in plan view.

3. A mechanism according to either preceding Claim, characterised by the boom (1) comprising a pipe mounted by a T-junction at the top of the upstand (6, 107).

4. A mechanism according to any preceding Claim, characterised by the dispersing means comprising nozzles (3) at opposite ends of the boom (1).

5. A mechanism according to Claim 4, characterised by the nozzles (3) being angled in the range 30° to 45°, preferably 45°, with respect to the longitudinal axis of the boom (1).

6. A mechanism according to any preceding Claim, characterised in that the means (102) to adjust the speed of the mechanism over the ground comprises a rod movable into and out of a mount carried by the upstand (107) and against which the connecting rod (103) abuts when not acted on by the cam.

7. A mechanism according to Claim 6, characterised by the cam means (8) comprising two parts (101) which act on the ratchet lever in turn, the spacing of the two parts being about half a tooth spacing between the teeth of the ratchet wheel.

8. A mechanism according to Claim 7, characterised by the two parts comprising two plates diametrically mounted on part of the upstand (107).

9. A mechanism according to Claim 8, characterised by each plate (101) comprising a curved part (118) and a substantially flat part (129), the flat parts (129) leading to a concave path (130) between the two plates.

10. A mechanism according to any preceding Claim, characterised by the pivotable device (109) comprising a counterbalance weight (112).

11. A mechanism according to any preceding Claim, characterised by a back stop device (111).

12. A mechanism according to any preceding Claim, characterised by cable guide means (15).

**Revendications**

1. Mécanisme pour disperser un liquide comprenant une flèche (1, 106), un châssis monté sur roues (7),

EP 0 188 308 B1

un tambour de treuil (17, 105) avec un axe de rotation, une roue à rochets (18) reliée au tambour (17, 105'), un levier à rochets (19, 104) supporté par une barre de liaison (22, 103), un moyen d'entrainement (8, 101) du tambour (17, 105') supporté par un motnant (6,107), un raccord de tuyau (9), un moyen de dispersion (3), un moyen (107) de réglage de la vitesse du mécanisme sur le sol, le châssis monté sur roues (7) supportant le tambour de treuil (17, 105') et le montant (6, 107), à l'extrémité inférieure (en service) duquel est installé un raccord de tuyau (9) et à l'extrémité supérieure duquel est monté le moyen d'entraînement (8, 101) sur sa périphérie, le montant (6, 107) étant rotatif par rapport au châssis monté sur roues (7), le dessus de la partie supérieure supportant la flèche (1, 106) à l'une ou l'autre extrémité de laquelle est installé le moyen de dispersion (3) qui est orienté pour projeter de l'eau ou un effluent vers l'extérieur sur les côtés opposés de l'axe longitudinal de la flèche (1, 106), de façon qu'en service, de l'eau ou un effluent soit appliquée par un tuyau souple au raccord et s'élève dans le montant (6, 107), circule le long de la flèche (106) et sorte par le moyen de dispersion (3), la flèche (1, 106) étant entrainée en rotation de façon que le moyen d'entraînement (8, 101) fixé au montant, vienne en prise avec le levier à rochets (19, 104) qui à son tour fait tourner la roue à rochets (18), laquelle actionne le tambour de treuil (17, 105') poru tirer un câble (16) en tirant ainsi le châssis monté sur roues (7) le long du câble (16), caractérisé en ce que le tambour de treuil (17, 105') est installé sur le châssis monté sur roues (7) avec son axe de rotation sensiblement horizontal et perpendiculaire à la direction du mouvement du châssis, en ce que le moyen d'entraînement (8, 101) comprend un moyen de came adapté à actionner le levier à rochets (19, 104), en ce qu'il existe un guide (110) pour guider le câble (16) dans sa traversée du tambour (17, 105'), et en ce qu'il existe un dispositif pivotant (102, 112, 113, 114) pour dégager le moyen d'entraînement (8, 101) à la fin d'une opération du mécanisme.

2. Mécanisme selon la revendication 1, caractérisé en ce que le châssis monté sur roues (7), vu en plan, a la forme d'un T ou d'un V.

3. Mécanisme selon l'une quelconque des revendications précédentes, caractérisé en ce que la flèche (1) est constituée d'un tuyau monté par un raccord en T en haut du montant (6, 107).

4. Mécanisme selon l'une quelconque des revendications précédentes, caractérisé en ce que le moyen de dispersion comprend des becs (3) aux extrémités opposées de la flèche (1).

5. Mécanisme selon la revendication 4, caractérisé en ce que les becs (3) sont inclinés de 30 à 45°, et de préférence de 45°, par rapport à l'axe longitudinal de la flèche (1).

6. Mécanisme selon l'une quelconque des revendications précédentes, caractérisé en ce que le moyen (102) de réglage de la vitesse du mécanisme sur le sol comporte une tige mobile entrant et sortant d'une monture portée par le montant (107) et contre laquelle la tige de liaison (103) vient buter lorsqu'elle n'est pas actionnée par la came.

7. Mécanisme selon la revendication 6, caractérisé en ce que le moyen de came (8) comprend deux parties (101) qui agissent tour à tour sur le levier à rochets, l'espacement entre les deux pièces étant d'environ la moitié de la distance entre axes des dents de la roue à rochets.

8. Mécanisme selon la revendication 7, caractérisé en ce que les deux parties sont deux plaques montées diamétralement sur une partie du montant (107).

9. Mécanisme selon la revendication 8, caractérisé en Ce que chaque plaque (101) comporte une partie courbe (118) et une partie sensiblement plate (129), les parties plates (129) conduisant à une trajectoire concave (130) entre les deux plaques.

10. Mécanisme selon l'une des revendications précédentes, caractérisé par le fait que le dispositif pivotant (109) comporte un contre-poids (112).

11. Mécanisme selon l'une quelconque des revendications précédentes, caractérisé par un dispositif de butée arrière (111).

12. Mécanisme selon l'une quelconque des revendications précédentes, caractérisé par un moyen de

7

EP 0 188 308 B1

guidage du câble (15).


**Ansprüche**

1. Vorrichtung zum Dispergieren einer Flüssigkeit, bestehend aus einem Ausleger (1,106), einem fahrbaren Gestell (7), einer Windentrommel (17,105') mit einer Rotationsachse quer zur Bewegungsrichtung des Gestells, einem Klinkenrad (18), verbunden mit der Windentrommel (17,105'), einem Klinkenhebel (19,104), der von einer Verbindungsstange (22,103) gehalten wird, Antriebsmitteln (8,101) für die Trommel (17,105') getragen von einem Ständer (6,107), einer Schlauchverbindung (9), Dispergiermitteln (3), Mitteln (102) zum Einstellen der Fahrgeschwindigkeit der Vorrichtung, wobei das fahrbare Gestell (7) die Windentrommel (17,105') trägt und den Ständer (6,107), an dessen unterem Ende (in Betrieb) die Schlauchverbindung (9) und an dessen oberem Teil außen die Antriebsmittel (8,101) sind, und der Ständer (6,107) rotierbar ist relativ zu dem fahrbaren Gestell (7), wobei die Spitze des oberen Teils den Ausleger (1,106) trägt, an dessen beiden Enden die Dispergiermittel (3) sind, die bestimmt sind, Wasser oder Abwasser an den gegenüberliegenden Seiten einer Längsachse des Auslegers (1,106) zu emittieren, wodurch, in Betrieb, wenn das Wasser oder Abwasser von einem flexiblen Schlauch zu der Verbindung und dem Ständer (6,107) hinauf, den Ausleger (1,106) entlang und aus den Dispergiermitteln (3) geleitet wird, der Ausleger (1,106) veranlaßt wird, so zu rotieren, daß die Antriebsmittel (8,101) auf dem Ständer den Klinkenhebel (19,104) antreiben, der wiederum das Klinkenrad (18) antreibt, das die Windentrommel (17,105) dreht, um ein Kabel (16) einzuziehen und dabei das fahrbare Gestell (7) entlang dem Kabel (16) zu ziehen, dadurch **gekennzeichnet**, daß die Windentrommel (17,105') auf dem fahrbaren Gestell (7) mit im wesentlichen horizontaler Rotationsachse angeordnet ist und daß Antriebsmittel (8,101) Nockenmittel enthalten, um den Klinkenhebel (19,104) zu betätigen, daß eine Führung (110) zum Führen des Kabels (16) vorhanden ist, wenn es über die Trommel (7,105') läuft und daß eine Schwenkeinrichtung (10,112,113,114) vorhanden ist, um die Antriebsmittel (8,101) am Ende einer von der Vorrichtung durchlaufenden Strecke abzuschalten.

2. Vorrichtung nach Anspruch 1, dadurch **gekennzeichnet**, daß das fahrbare Gestell (7) in der Draufsicht T- oder V-förmig ist.

3. Vorrichtung nach einem der vorhergehenden Ansprüche, dadurch **gekennzeichnet**, daß der Ausleger (1) ein Rohr, eingebaut in eine T-Verbindung an der Spitze des Ständers (6,107), aufweist.

4. Vorrichtung nach einem der vorhergehenden Ansprüche, dadurch **gekennzeichnet**, daß die Dispergiermittel Düsen (3) an den gegenüberliegenden Seiten des Auslegers (1) aufweisen.

5. Vorrichtung nach Anspruch 4, dadurch **gekennzeichnet**, daß die Düsen (3) bezüglich der Längsachse des Auslegers (1) in einem Winkel von 30° bis 45°, vorzugsweise 45°, angeordnet sind.

6. Vorrichtung nach einem der vorhergehenden Ansprüche, dadurch **gekennzeichnet**, daß die Mittel (102) zum Einstellen der Fahrgeschwindigkeit der Vorrichtung an den Boden anpassen, eine Stange umfassen, die in ein und aus einem Gehäuse bewegbar geführt ist und von dem Ständer (107) getragen wird und gegen die die Kurbelstange (103) anstößt, wenn sie nicht durch die Nockenmittel angetrieben wird.

7. Vorrichtung nach Anspruch 6, dadurch **gekennzeichnet**, daß die Nockenmittel (8) zwei Teile (101) aufweisen, die den Klinkenhebel antreiben, wobei der Abstand zwischen den beiden Teilen etwa einen halben Zahnabstand zwischen den Zähnen des Klinkenrades beträgt.

8. Vorrichtung nach Anspruch 7, dadurch **gekennzeichnet**, daß die zwei Teile zwei Platten aufweisen, die an diametralen Stellen an einem Teil des Ständers (107) eingebaut sind.

9. Vorrichtung nach Anspruch 8, dadurch **gekennzeichnet**, daß jede Platte (101) einen gekrümmten Teil (118) und einen ziemlich flachen Teil (129) aufweist, wobei die flachen Teile (129) zu einem konkaven Verlauf (130) zwischen den zwei Platten führen.

10. Vorrichtung nach Anspruch 8, dadurch **gekennzeichnet**, daß die Schwenkvorrichtung (109) ein Ausgleichsgewicht (112) hat.

11. Vorrichtung nach einem der vorhergehenden Ansprüche, **gekennzeichnet**, daß eine Rücklaufsperre (111) vorhanden ist.

12. Vorrichtung nach einem der vorhergehenden Ansprüche, **gekennzeichnet** durch Mittel (15) zur Führung des Kabels (16).

FIG.1.

FIG. 2.

FIG.3.

FIG. 4.

FIG.5.

FIG.6.

FIG.7.

FIG.8.